# EUROPEAN PATENT APPLICATION

(11) **EP 4 650 595 A1**
(43) Date of publication of application: **19.11.2025**
(21) Application number: 24382532.0
(22) Date of filing: 17.05.2024
(51) Int. Cl.: F03D 7/02

(54) **METHOD FOR OPERATING A WIND TURBINE AND WIND TURBINE**

(71) Applicant: Nordex Energy Spain, S.A.U., 31395 Barasoain (Navarra) (ES)
(72) Inventor: Induráin Gaspar, Javier, 31395 BARASOAIN (ES)
(74) Representative: Epping - Hermann - Fischer

(57) **Abstract**

A method for operating a wind turbine (100) having a rotor (10) with at least one rotor blade (1, 2, 3) and a wind turbine (100) are disclosed. The method comprising:
- determining a tilting value representative for a tilt bending moment acting on the rotor (10),
- providing a function (150) with the tilt bending moment as functional argument,
- determining a thrust limit value for the rotor (10) for the determined tilting value based on the function (150), wherein the thrust limit value is representative for a maximum allowable thrust force acting on the rotor (10),
- operating the wind turbine (100) dependent on the determined thrust limit value.

## Description

The disclosure relates to a method for operating a wind turbine having a rotor with at least one rotor blade. The disclosure further relates to a wind turbine, in particular to a wind turbine comprising a control system which is configured to execute a method as described herein.

A wind turbine may include a rotor that includes a rotatable rotor hub assembly having multiple rotor blades. The rotor blades transform wind energy into a drive torque that drives the generator via a drive train.

It is desirable to provide a method for operating a wind turbine. The wind turbine comprises a rotor. The rotor comprises at least one rotor blade. Furthermore, a controller is disclosed which is configured to execute the described method.

According to an embodiment, a tilting value representative for a tilt bending moment is determined. The tilting value is representative for the tilt bending moment which acts on the rotor. A function is provided. The function comprises the tilt bending moment as a functional argument. A thrust limit value is determined. The thrust limit value is determined for the rotor for the determined tilting value based on the function. The thrust limit value is representative for a maximum allowable thrust force acting on the rotor. The wind turbine is operated dependent on the determined thrust limit value.

In particular, the tilt bending moment is a moment acting on the whole rotor. For example, there is one single tilt bending moment for the whole rotor. For example, the wind turbine is tilted during operation dependent on wind shear conditions. Extreme positive vertical wind shears, i.e. wind shears in which the wind speeds in an upper region of the rotor plane (above the rotor hub) are significantly higher than in a lower region of the rotor plane (under the rotor hub), may endanger the structural integrity of the rotor blades and the bearing of the main shaft due to overload. Extreme negative vertical wind shears, i.e. wind shears in which the wind speeds in the lower region of the rotor plane (under the rotor hub) are significantly higher than in an upper region of the rotor plane (above the rotor hub), may create the risk of a rotor blade hitting the tower.

The function allows for determination of the thrust limit value dependent on the actual tilt bending moment acting on the rotor. For example, the tilt bending moment acting on the rotor and thus the tilting value are each dependent on actual wind shear conditions. In particular, the tilting value can be directly determined. The function enables the determination of the thrust limit value and thus the setting of the maximum allowable thrust force based on the determined tilting value. This makes an adaptive thrust limitation possible, thus enabling an optimal trade-off between the limitation of the loads acting on the wind turbine components and the maximization of the annual energy production of the wind turbine for different wind shear conditions. In particular, a continuous scheduling of the thrust limit value is possible. This can increase the annual energy production of the wind turbine. The thrust limit value can be lower if the tilting value is such that the risk of overloading the wind turbine increases. This is possible in both directions, in the extreme high (positive) or extreme low (negative) direction for the tilting value. The thrust limit value can therefore be set as high as possible therebetween. An unnecessarily low value as a precautionary measure can be avoided.

The wind turbine is protected against unforeseen high or low wind shears. Moreover, tilting bending moments caused by inhomogeneous wake can be considered when determining the thrust limit value, wherein the inhomogeneous wake may for example occur in case the wind turbine is at the wake of another wind turbine having a different hub altitude. The method enables a protection of the wind turbine by a direct measurement of the loads causing the risk of overload and/or the risk of the rotor blade hitting the tower. Thereby, high reliability is possible. For example, if the method detects that the high tilt bending moments have disappeared or have sufficiently attenuated, the thrust limit value can be increased and the wind turbine can be set back to its maximum production state. The method enables the limit value to be directly and continuously adapted to the source of risk, for example the tilt bending moment. For example, a complex modelling of the wind shear, which is for example affected by orography, how a wake evolves and meanders on a certain orography or of a stratified flow can be avoided.

According to an embodiment, a minimum allowable pitch angle value is determined for the rotor blade. The minimum allowable pitch angle value is determined dependent on the determined thrust limit value, which includes that the wind turbine is operated dependent on the determined minimum allowable pitch angle value. According to embodiments, the wind turbine is prevented from being operated according to a pitch angle value which is below the minimum allowable pitch angle value. In the case that the rotor comprises two or more rotor blades, the minimum allowable pitch angle is to be understood as a collective minimum allowable pitch angle. In other words, the same minimum allowable pitch angle applies collectively for each of the rotor blades. For example, the minimum allowable pitch angle is determined dependent on further values, for example a thrust value, a wind speed value and/or a wind turbulence value. For example, a high thrust limit value leads to a low minimum allowable pitch angle value. The minimum allowable pitch angle value can be increased if the thrust limit value decreases.

According to an embodiment, a first pitch angle setpoint for the rotor blade is determined. The first pitch angle setpoint for the rotor blade is determined dependent on the determined thrust limit value. In particular, the first pitch angle setpoint is determined dependent on the minimum allowable pitch angle value for the rotor blade and on a second pitch angle setpoint. The wind turbine is operated to set a pitch angle value of the rotor blade to the determined first pitch angle setpoint. In particular, the wind turbine is operated such that a pitch angle of the rotor blade is set to the determined first pitch angle setpoint.

For example, the first pitch angle setpoint depends on additional input values and/or additional input variables. The second pitch angle setpoint is determined by one or more control functions, such as an optimal pitch control function, a rotor speed control function or an emergency run control function. Control functions determining a second pitch angle setpoint are not further detailed in the present disclosure.

The present disclosure refers to a first pitch angle setpoint and to a second pitch angle setpoint. In particular, each of these pitch angle setpoints is to be understood as a collective pitch angle setpoint in the case that the rotor comprises two or more rotor blades. In other words, the same pitch angle setpoint applies collectively for each of the rotor blades.

According to embodiments, an individual pitch angle offset may be aggregated to the first pitch angle setpoint before the pitch angle of the corresponding rotor blade is set. The individual pitch angle offset may differ for each of the rotor blades, such that each rotor blade may be subject to a different individual pitch angle setpoint. According to an embodiment, one or more strain sensors are provided on the at least one rotor blade. The tilting value is determined using the one or more strain sensors.

The one or more strain sensors may, for example, be located in a region close to the root of the rotor blade. For example, each rotor blade may comprise three strain sensors which are oriented orthogonally with respect to each other.

Blade bending moments, which are part of the rotor blade loads, are determined based on the strain sensor measurements, for example. The blade bending moments are then transformed from a rotating reference frame to the fixed reference frame via Coleman transformation. The tilt bending moment of the rotor is calculated in the fixed reference frame. For example, a rotor position sensor is also used in the process.

For example, the bending moment of a rotor blade is herein meant to be the bending moment acting on the rotor blade and causing deflection of the rotor blade out of the rotor plane. The bending moment is, therefore, also referred to as "out of plane" bending moment. It is a quantity in a reference frame of the rotor blade. This means, it is a quantity of a reference frame rotating with the rotor blade, herein referred to as "rotating reference frame". With the help of a coordinate transformation, the bending moment of the at least one rotor blade can be translated into the tilt bending moment of the rotor.

The rotating reference frame is, in particular, the above-mentioned reference frame of the rotor blade rotating with the rotor blade and the fixed reference frame is, in particular, the above-mentioned reference frame fixed with respect to the environment or with respect to the tower, respectively.

According to an embodiment, the function is a non-constant function, at least in sections. In particular, the function is a non-constant continuous function, or a non-constant function defined by a discrete number of values, at least in sections. This makes a progressive adaptation of the thrust limitation possible, thus enabling an efficient trade-off between the limitation of the loads acting on the wind turbine components and the maximization of the annual energy production of the wind turbine for any tilting value, at least in the aforementioned sections. The section refers to a section of the function, for example a part of the curve that represents the function. For example, the non-constant function, in particular the non-constant continuous function, results from a mathematical formula. In case the non-constant function is defined by a discrete number of values, the thrust limit value is for example calculated via interpolation. For example, the function is a non-constant function in only one or more sections. In another example, the whole function is a non-constant function.

According to an embodiment, the function is a piecewise constant function comprising a plurality of pieces (can also be referred to as sections), wherein the pieces of any pair of neighbouring pieces have different constant thrust limit values. In other words, the function is a combination of step functions, at least in sections.

According to an embodiment, the function is increasing and/or decreasing at least in a section. The curve that represents the function for example comprises an increasing section. Alternatively, or in addition, the curve comprises a decreasing section.

According to an embodiment, the function comprises a flat section with a gradient of zero. For example, the flat section extends around the zero tilt bending moment. In another example, the flat section comprises only negative tilt bending moment values. In another example, the flat section comprises only positive tilt bending moment values. For example, the function comprises an increasing and/or decreasing section as well as a flat section.

According to an embodiment, the flat section is between an increasing section and a decreasing section. The increasing section comprises smaller tilt bending moment values than the flat section and the decreasing section comprises larger tilt bending moment values than the flat section. Therefore, in case the flat section extends around the zero tilt bending moment, the increasing section comprises only negative tilt bending moment values and the decreasing section comprises only positive tilt bending moment values. In case the flat section comprises only negative tilt bending moment values, the decreasing section extends around the zero tilt bending moment. In case the flat section comprises only positive tilt bending moment values, the increasing section extends around the zero tilt bending moment.

For example, the increasing section, the flat section and the decreasing section altogether form a continuous function. For example, starting at a tilt bending moment which is zero, when the tilt bending moment progressively increases, the thrust limit value first stays constant and then gradually decreases. Alternatively, or in addition, starting from the tilt bending moment, which is zero, when the tilting value of the tilt bending moment progressively decreases, the thrust limit value first stays constant and then gradually decreases.

For example, the increasing section and the decreasing section can each be obtained by multiplying the thrust limit value of the flat section by a gain factor which is less than 1. The value of the gain factor continuously decreases as the tilting value gets further away from zero, both in a positive and negative direction. The increasing section of the function ensures a desired distance between blade tip and tower. The decreasing section of the function enables protection of the main bearing and the gearbox against overloading.

According to an embodiment, the increasing section comprises a plurality of different gradient values and/or the decreasing section comprises a plurality of different gradient values. This enables a finetuning of the function and/or the curve of the function in order to optimize the trade-off between load limitation and annual energy production.

According to a further embodiment, the function is at least partially a linear function. Thus, the curve of the function, for example, comprises a linear section.

Alternatively, or in addition, the function is at least partially a non-linear function. Thus, the curve of the function comprises a non-linear section. For example, the function comprises a linear section as well as a non-linear section.

According to an embodiment, a lower limit value of the tilt bending moment is set. Alternatively, or in addition, an upper limit value of the tilt bending moment is set. The wind turbine is operated to stop rotation of the rotor of the wind turbine if the tilting value falls below the lower limit value or exceeds the upper limit value. Thus, when certain extreme positive or extreme negative tilting values are reached, the method commands a stop of the wind turbine.

According to an embodiment, different operating modes for the wind turbine are specified. A current operating mode is selected out of the different operating modes dependent on conditions in the environment of the wind turbine. The wind turbine is operated dependent on the determined thrust limit value, while the selected current operating mode is maintained.

The conditions in the environment, for example, comprise a wind direction, wind speed, the time of day, air pressure and/or other environmental conditions and/or environmental influences that may affect the operation of the wind turbine. The operating mode for example is a specific selection of defined parameters for the operation of the wind turbine, for example a rated power setpoint, a rated rotor speed setpoint and other operating conditions that for example depend on environmental conditions and/or operating specifications and/or instructions.

The wind turbine operation according to the determined thrust limit value is, for example, as such not responsible for a change of the operating mode. The operating mode is only changed in the case that the environmental conditions are such that the requirements for using the current operating mode are no longer fulfilled.

According to an embodiment, a wind turbine comprises a rotor with at least one rotor blade. The wind turbine comprises a tower. The wind turbine comprises a pitch setting system for setting a pitch angle of the rotor blade. The wind turbine comprises a control system for controlling the pitch setting system. The control system is configured to execute a method according to at least one embodiment described herein.

Features and advantages of the described method also apply to the described wind turbine and vice versa.

The present invention will be further described with reference to the accompanying drawings. In the drawings, elements of the same structure and/or functionality may be referred to by the same reference signs. It is to be understood that embodiments shown in the figures are illustrative representations and are not necessarily drawn to scale.
Figure 1 is a schematic view of a wind turbine according to an embodiment,
Figures 2 to 6 are schematic views of functions according to different embodiments,
Figure 7 is a schematic view of a flowchart of a method according to an embodiment, and
Figure 8 is a schematic view of a block diagram with a function according to an embodiment.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents and alternatives falling within the scope of the invention defined by the appended claims.

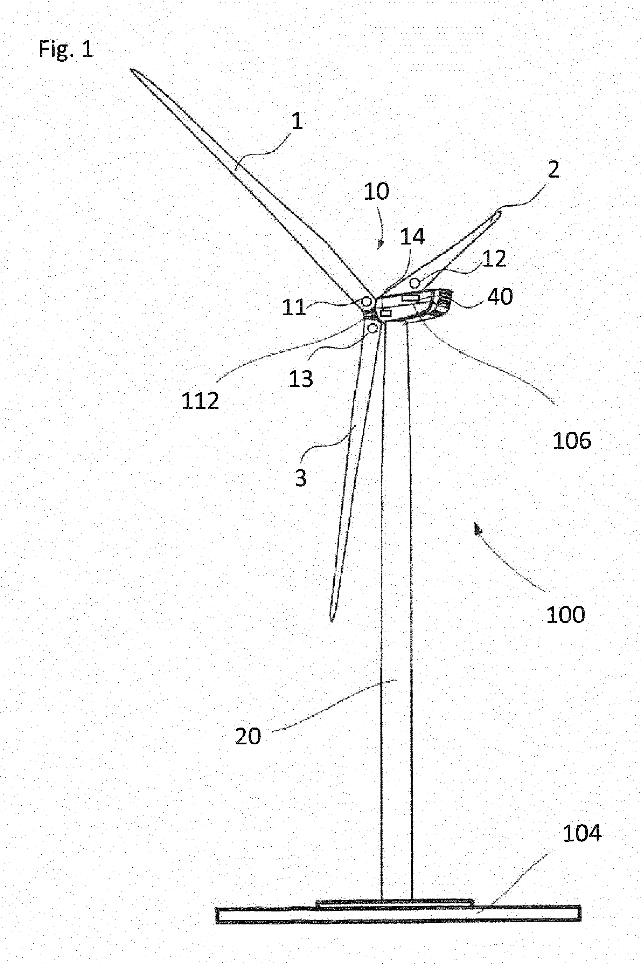

As shown in Figure 1, a wind turbine 100 comprises a tower 20. The tower 20 is connected to a foundation 104 fixed on a ground. The foundation 104 is formed in and supported by the ground. On a top end of the tower 20 opposite to the foundation 104 a nacelle 106 is arranged. The nacelle 106 houses the drive train. Inside the nacelle 106, for example, a generator is arranged which is connected via the drive train with a rotor 10. The drive train comprises, for example, a gearbox and a rotor shaft. The rotor 10 comprises several rotor blades 1, 2, 3. The rotor blades 1, 2, 3 are mounted on a rotor hub 112. The rotor hub 112 is connected to the rotor shaft.

The rotor 10 is driven in operation by an airflow, for example wind. The rotational movement of the rotor 10 is transmitted via the drive train to the generator. The generator converts the energy of the rotor 10 into electrical energy.

A first sensor unit 11 is arranged on the first rotor blade 1. A second sensor unit 12 is arranged on the second rotor blade 2. A third sensor unit 13 is arranged on the third rotor blade 3. For example, the first sensor unit 11, the second sensor unit 12 and the third sensor unit 13 each comprise three sensors, in particular three strain sensors, which are oriented orthogonally with respect to each other. For example, the sensors of the first sensor unit 11, the second sensor unit 12 and the third sensor unit 13 are each laminated in the respective associated first rotor blade 1, second rotor blade 2 and third rotor blade 3. The strain sensor, for example, comprises a strain gauge sensor. For example, the strain sensor comprises an optical sensor. The first sensor unit 11, the second sensor unit 12 and the third sensor unit 13 are each configured to measure deflections of the respective first rotor blade 1, second rotor blade 2 and third rotor blade 3 from the rest position.

In order to set the rotational velocity and the power production, the wind turbine 100 comprises a pitch setting system 14 which is configured to set the pitch angles of the rotor blades 1, 2, 3. The pitch setting system 14 may be configured to set the pitch angle of each rotor blade 1, 2, 3, individually and/or the set the pitch angles collectively. For example, the pitch setting system 14 comprises at least one actuator for each rotor blade 1, 2, 3 via which an electrical signal is translated into a mechanical movement of the respective rotor blade 1, 2, 3 around the axis of the pitch bearing.

The wind turbine 100 further comprises a control system 40 configured to operate the wind turbine 100. The control system 40 for example comprises at least one processor (not explicitly shown) and memory which store executable commands which can be executed by the processor.

During operation, wind can act on the wind turbine 100. The wind may have a higher velocity closer to the ground than further away from the ground (so-called negative vertical wind shear). It is also possible that the wind has a lower velocity closer to the ground than further away from the ground (so-called positive vertical wind shear). Due to the forces acting on the rotor blades 1, 2, 3, the rotor blades, 1, 2, 3 are deflected with respect to their rest position. Due to the vertical wind shear, the rotor blade present in a lower region of the rotor plane, i.e. the rotor blade closer to the ground, is deflected differently than the rotor blade present in an upper region of the rotor plane, i.e. further away from the ground. Consequently, a tilt bending moment acts on the rotor 10, which tilts the rotor 10. This tilt bending moment, which is caused by the vertical wind shear, comes in addition to the tilt bending moment caused by the rotor weight.

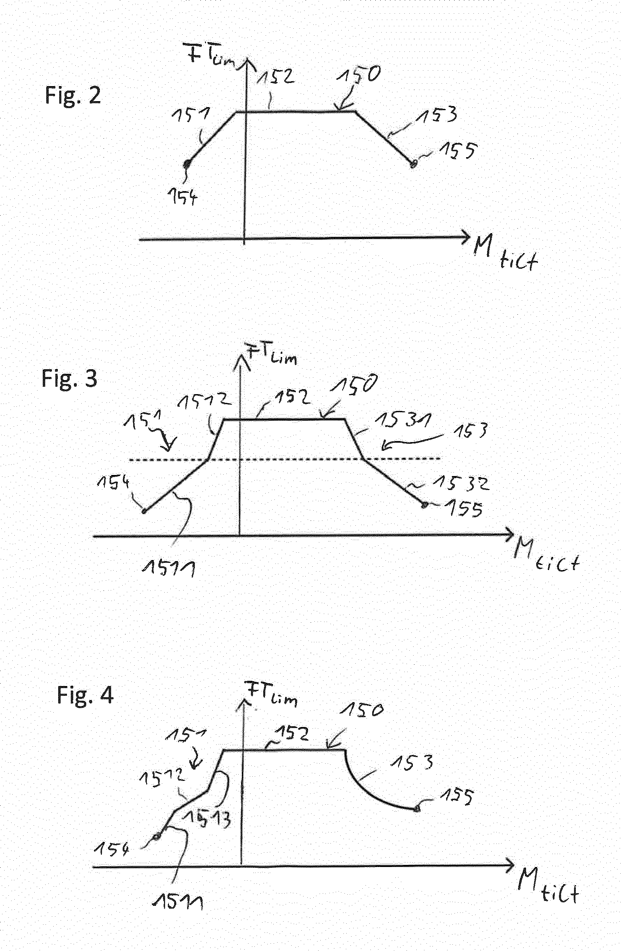

A negative vertical wind shear may lead to a rotor blade hitting the tower. A positive vertical wind shear may cause great stress on the components of the wind turbine 100, especially the rotor blades and the rotor shaft bearing arrangement. To avoid these effects, the control system 40 is configured to control the wind turbine 100 dependent on a function 150, which is shown according to different embodiments in Figures 2 to 6. The tilt bending moment Mₜᵢₗₜ is a moment acting on the whole rotor 10. Thus, there is one tilt bending moment Mₜᵢₗₜ that deflects the whole rotor. The function 150 comprises the tilt bending moment Mₜᵢₗₜ as functional argument. The function 150, for example, is a non-constant continuous function in at least a first section 151 and a third section 153. The function 150 is increasing in the first section 151. The function 150 is decreasing in the third section 153.

Between the first section 151 and the third section 153, a second section 152 is provided, which is flat. The function 150 comprises the constant second section 152. The second section 152 comprises a gradient of zero. The first section 151 and the third section 153 each comprise a gradient different to zero, whereby the gradient of the first section 151 is different to the gradient of the third section 153.

The function 150 comprises a lower limit value 154. The function 150 comprises the lower limit value 154 at a negative end of the first section 151. The function 150 comprises an upper limit value 155. The function 150 comprises the upper limit value 155 at a positive end of the third section 153.

The function 150 extends between the lower limit value 154 and the upper limit value 155. Starting at the lower limit value 155, the function 150 first increases in the first section 151, then stays constant in the second section 152 and then decreases in the third section 153 until the upper limit value 155.

The control system 40 is configured to determine a thrust limit value FTₗᵢₘ for the rotor 10 dependent on the tilt bending moment Mₜᵢₗₜ. For different values of the tilt bending moment, different thrust limit values for the rotor 10 are specified by the function 150. Thus, a maximum allowable thrust force acting on the rotor 10 can be determined with the function 150 dependent on the tilting value of the tilt bending moment Mₜᵢₗₜ.

Around the zero value of the tilt bending moment Mₜᵢₗₜ, the function 150 stays constant in the flat second section 152 in a positive and a negative direction.

The limits of the second section 152, for example, are set so that a guaranteed power curve of the wind turbine 100 is not affected. For example, in the second section 152, a low value of the minimum allowable pitch angle value for the rotor blades 1, 2, 3 is set. This enables a high energy production, in particular when low vertical wind shears occur.

For larger negative vertical wind shears, the tilting value of the tilt bending moment is negative and becomes smaller. This corresponds in particular to the first section 151. With greater negative vertical wind shears, the thrust limit value FTₗᵢₘ is reduced to maintain or to limit the increase of a deflection of the rotor 10 and of the rotor blades 1, 2, 3, in particular the rotor blade(s) present in a lower region of the rotor plane. Thus, a risk of collision between the blade and the tower is reduced. For example, the minimum allowable pitch angle value is increased in the first section 151 from the direction of the second section 152 towards the lower limit value 154. In particular, the decrease of the thrust limit value FTₗᵢₘ in the first section 151 and the increase of the minimum allowable pitch angle value in the first section 151 are carried out continuously and not gradually or step-by-step.

When the lower limit value 154 of the tilt bending moment Mₜᵢₗₜ is reached, the control system 40 commands a stop of the rotation of the rotor 10. The thrust limit value FTₗᵢₘ of the first section 151 is lowest at the lower limit value 154.

A corresponding increase of the minimum allowable pitch angle value for a decrease of the thrust limit value FTₗᵢₘ is formed in the third section 153 between the second section 152 and the upper limit value 155 for an increasing positive wind shear. With an increasing positive vertical wind shear, the tilting value of the tilt bending moment Mₜᵢₗₜ is positive and becomes greater. To protect the components in the nacelle 106, in particular the rotor bearing arrangement and/or the gearbox, the minimum allowable pitch angle value is increased to decrease, to maintain or to limit the increase of the deflection of the rotor 10 and of the rotor blades 1, 2, 3, in particular the rotor blade(s) present in an upper region of the rotor plane.

If the tilting value of the tilt bending moment Mₜᵢₗₜ reaches the upper limit value 155, the control system 40 commands a stop of the rotation of the rotor 10. As in the first section 151, the decrease of the thrust limit value as well as the increase of the minimum allowable pitch angle value is carried out continuously. The thrust limit value FTₗᵢₘ of the third section 153 is lowest at the upper limit value 155.

As Figures 2 to 4 show by way of example, the function 150 can comprise many different forms in the first section 151 and in the third section 153.

As shown in Figure 2, the function 150 for example comprises a single gradient for the first section 151. The third section 153 for example comprises a single gradient. The gradient of the first section 151 and the gradient of the third section 153 may be the same or different to each other.

As shown in Figure 3, the first section 151 comprises two different gradients. The second section 153 comprises two different gradients as well. Thus, efficiency and self-operation can be more finely tuned to each other depending on the tilting value of the tilt bending moment Mₜᵢₗₜ. For example, a first part 1511 of the first section 151 which adjoins the lower limit value 154 comprises a lower gradient than a second part 1512 of the first section 151 which adjoins the second section 152. Of course, it can also be the other way around, and the second part 1512 comprises a lower gradient.

A first part 1531 of the third section 153 which adjoins the second section 152, for example comprises a greater gradient than a second part 1532 of the third section 153. The second part 1532 of the third section adjoins the upper limit value 155. Of course, it can also be the other around and the second part 1532 of the third section 153 comprises a larger gradient than the first part 1531 of the third section 153.

As shown in Figure 4, the first section 151 can comprise more than two different gradients, for example three different gradients. For example, a gradient in the first part 1511 of the first section 151 is different to the gradient of the second part 1512 of the first section 151 and different to a gradient of a third part 1513 of the first section 151. Of course, more than three different parts and different gradients are possible, for example four different gradients, five different gradients or more.

According to embodiments, the third section 153 comprises three or more different gradients (not explicitly shown in the figures).

As exemplarily shown for the third section 153 in Figure 4, the function 150 can comprise a non-linear form. According to further embodiments (not explicitly shown in the figures), the first section 151 comprises a non-linear form.

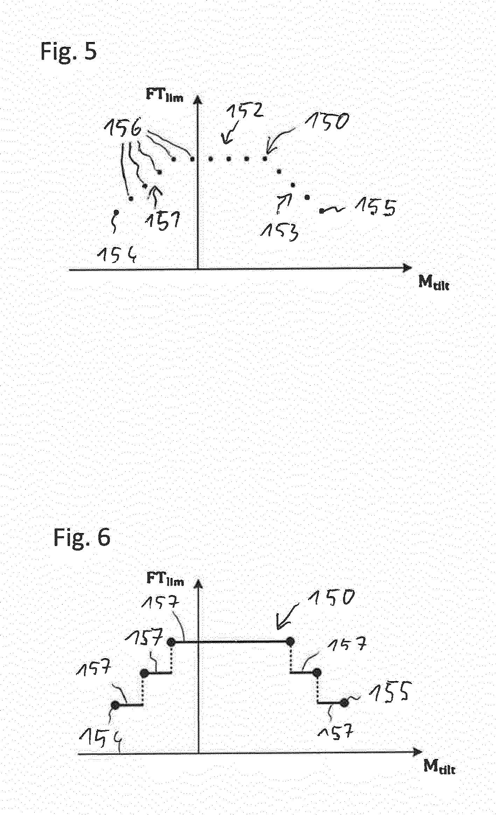

As shown in Figure 5, the function 150 can be a non-constant function defined by a discrete number of values 156. The thrust limit value corresponding to a tilting bending moment value between two neighbouring tilting bending moment values comprised in the function 150 may for example be obtained via interpolation.

For example, the discrete values 156 are generally increasing in the first section 151. The discrete values 156 are generally decreasing in the third section 153. The discrete values 156 are generally arranged flat in the second section 152. Of course, other general shapes are possible as for example shown in Figures 3 and 4.

As shown in Figure 6, the function 150 can be a piecewise constant function comprising a plurality of pieces 157, wherein the pieces 157 of any pair of directly neighbouring pieces 157 have different constant thrust limits. In other words, the function 150 can be a combination of step functions. For example, function 150 comprises a plurality of jump discontinuities.

The tilting value of the tilt bending moment Mₜᵢₗₜ for example is determined using the first sensor unit 11, the second sensor unit 12 and the third sensor unit 13. Using the function 150, the thrust limit value for the rotor is determined and for example the minimum allowable pitch angle value for the rotor blades 1, 2, 3 is determined to achieve the highest possible energy output (annual energy production) on the one hand, and to sufficiently reduce the mechanical loads on the nacelle 106 and components therein as well as the risk of a collision between a rotor blade 1, 2, 3 and the tower 20 on the other hand.

The determined tilting value representative for the tilt bending moment Mₜᵢₗₜ is an input of the function 150. The thrust limit value corresponds to the output of the function 150 or is the output of the function 150.

The function 150 protects the wind turbine 100 against unforeseen high and low vertical wind shears. The function 150 uses a direct measurement of the loads causing a deflection of the rotor 10. When the tilting value is within the second section 152, a maximum energy production state is possible. The function 150 enables an adaption of the thrust limit value and/or the minimum allowable pitch angle value directly and continuously dependent on the tilting value of the tilt bending moment.

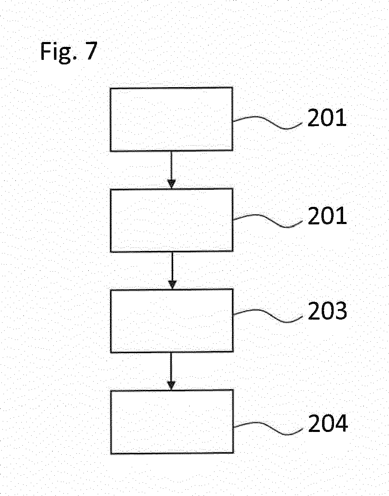

Figure 7 shows a flowchart of a method that is carried out with the help of the controller, for example.

In a first step 201, the tilting value representative for the tilt bending moment acting on the rotor 10 is determined. For example, the tilting value is determined using at least one of the first sensor unit 11, the second sensor unit 12, and the third sensor unit 13.

In a second step 202, the function 150 is provided. For example, the function 150 is stored in the memory of the controller 40.

In a third step 203, the thrust limit value for the rotor 10 is determined for the determined tilting value based on the function 150. The thrust limit value is representative for a maximum allowable thrust force acting on the rotor. The deflection of the rotor 10 for example is dependent on the thrust force acting on the rotor. The function 150 is used to determine the thrust limit value for the rotor to limit the deflection of the rotor while controlling the thrust force acting on the rotor. For example, the first pitch angle setpoint for the rotor blades 1, 2, 3 is set dependent on the determined thrust limit value and/or the minimum allowable pitch angle value to limit the thrust force acting on the rotor and to limit the deflection of the rotor.

In a step 204, the wind turbine 100 is operated dependent on the determined thrust limit value. For example, the wind turbine is operated to set the respective pitch angleof the rotor blades 1, 2, 3 according to the determined first pitch angle setpoint.

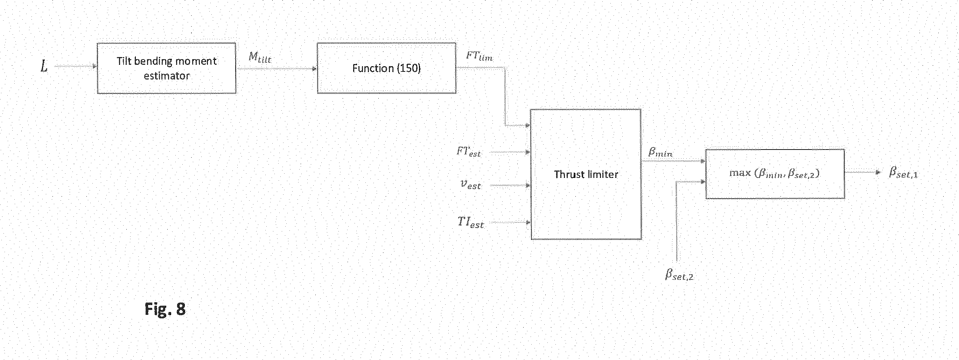

Figure 8 shows the use of the function 150 in the controller 40 according to an embodiment. As exemplarily shown in Figure 8, rotor blade loads L are used as inputs for a tilt bending moment estimator. The rotor blade loads L for example are loads, e.g. moments and forces, acting on each rotor blade 1, 2, 3.

The tilt bending moment estimator determines the tilt bending moment Mₜᵢₗₜ. The tilt bending moment Mₜᵢₗₜ is the input for the function 150. With the function 150 the thrust limit value FTₗᵢₘ is calculated. The thrust limit value FTₗᵢₘ is an input for a thrust limiter. For example, further inputs to the thrust limiters are an estimated thrust value FTₑₛₜ, an estimated wind speed vₑₛₜ and/or an estimated wind turbulence indicator TIₑₛₜ. The thrust limiter calculates the minimum allowable pitch angleβₘᵢₙ. The minimum allowable pitch angle βₘᵢₙ and a second pitch angle setpoint β_{set,2} are compared and the greater of the two values is used as the applied first pitch angle setpoint β_{set,1}. In particular, the estimated wind turbulence indicator TIₑₛₜ is a value indicative a wind turbulence, in particular a turbulence wind intensity.

For example, the thrust value FTₑₛₜ is estimated based on at least one of a mean pitch angle, an electrical power, a generator angular velocity, an ambient temperature, an atmospheric pressure, a generator torque, and an air density. Alternatively, or in addition, other variables are used to estimate the thrust value FTₑₛₜ.

The methods, controllers and systems described herein, which use the function 150, enable an efficient and at the same time reliable and safe operation of the wind turbine 100 and a large power generation is realized.

### References

- 1: first rotor blade
- 2: second rotor blade
- 3: third rotor blade
- 10: rotor
- 11: first sensor unit
- 12: second sensor unit
- 13: third sensor unit
- 14: pitch setting system
- 20: tower
- 40: control system
- 100: wind turbine
- 104: foundation
- 106: nacelle
- 112: rotor hub

- 150: function
- 151, 152, 153: section
- 1511, 1512, 1513, 1531, 1532: part
- 154: lower limit value
- 155: upper limit value
- 156: discrete number of values
- 157: piece

- 201 - 204: method steps

- β_{set,1}: first pitch angle setpoint
- βₘᵢₙ: minimum allowable pitch angle
- β_{set,2}: second pitch angle setpoint
- FTₑₛₜ: (estimated) thrust value
- FTₗᵢₘ: thrust limit value
- L: rotor blade loads
- Mₜᵢₗₜ: tilt bending moment
- TIₑₛₜ: (estimated) turbulence indicator
- vₑₛₜ: (estimated) wind speed

## Claims

1. Method for operating a wind turbine (100) having a rotor (10) with at least one rotor blade (1, 2, 3), the method comprising:
- determining a tilting value representative for a tilt bending moment acting on the rotor (10),
- providing a function (150) with the tilt bending moment as functional argument,
- determining a thrust limit value for the rotor (10) for the determined tilting value based on the function (150), wherein the thrust limit value is representative for a maximum allowable thrust force acting on the rotor (10),
- operating the wind turbine (100) dependent on the determined thrust limit value.

2. Method according to claim 1, comprising:
- determining a minimum allowable pitch angle value for the rotor blade (1, 2, 3) dependent on the determined thrust limit value, and wherein operating the wind turbine (100) dependent on the determined thrust limit value comprises
- operating the wind turbine (100) dependent on the determined minimum allowable pitch angle value.

3. Method according to one of the preceding claims, comprising:
- determining a first pitch angle setpoint for the rotor blade (1, 2, 3) dependent on the determined thrust limit value, in particular dependent on the minimum allowable pitch angle value for the rotor blade (1, 2, 3) and on a second pitch angle setpoint,
- operating the wind turbine (100) to set a pitch angle value of the rotor blade (1, 2, 3) to the determined first pitch angle setpoint.

4. Method according to one of the preceding claims, comprising:
- providing one or more strain sensors (11, 12, 13) on the at least one rotor blade (1, 2, 3),
- determining the tilting value using the one or more strain sensors (11).

5. Method according to one of the preceding claims, wherein the function (150) is a non-constant function at least in a section (151, 153), in particular a non-constant continuous function at least in a section (151, 153) or a non-constant function defined by a discrete number of values (156) at least in a section (151, 153).

6. Method according to one of the preceding claims, wherein the function (150) is increasing and/or decreasing at least in a section (151, 153).

7. Method according to one of the preceding claims, wherein the function (150) is a piecewise constant function comprising a plurality of pieces (157), wherein the pieces (157) of any pair of neighbouring pieces (157) have different constant thrust limit values.

8. Method according to one of the preceding claims, wherein the function (150) comprises a flat section (152) with a gradient of zero, wherein in particular the flat section (152) extends around the tilt bending moment value of zero or the flat section (152) comprises only negative tilt bending moment values or the flat section (152) comprises only positive tilt bending moment values.

9. Method according to claim 8, wherein the flat section (152) is between an increasing section (151) and a decreasing section (153), wherein the increasing section (151) comprises smaller tilt bending moment values than the flat section (152) and the decreasing section (153) comprises larger tilt bending moment values than the flat section (152).

10. Method according to claim 9, wherein the increasing section (151) comprises a plurality of different gradient values and/or the decreasing section (153) comprises a plurality of different gradient values.

11. Method according to one of the preceding claims, wherein the function (150) is at least partially a linear function.

12. Method according to one of the preceding claims, wherein the function (150) is at least partially a non-linear function.

13. Method according to one of the preceding claims, comprising:
- setting a lower limit value (154) of the tilt bending moment and/or an upper limit value (155) of the tilt bending moment,
- operating the wind turbine (100) to stop rotation of the rotor (10) of the wind turbine (100) if the tilting value falls below the lower limit value (154) or exceeds the upper limit value (155).

14. Method according to one of the preceding claims, comprising:
- specifying different operating modes for the wind turbine (100),
- selecting a current operating mode out of the different operating modes dependent on conditions in the environment of the wind turbine (100),
- operating the wind turbine (100) dependent on the determined thrust limit value while maintaining the selected current operating mode.

15. Wind turbine (100) comprising
- a rotor (10) with at least one rotor blade (1, 2, 3),
- a tower (20),
- a pitch setting system (14) for setting a pitch angle of the rotor blade (1, 2, 3),
- a control system (40) for controlling the pitch setting system (14), wherein the control system (40) is configured to execute a method according to one of the preceding claims.
